# EUROPEAN PATENT SPECIFICATION

(11) **EP 3 457 838 B1**
(45) Date of publication and mention of the grant of the patent: **17.06.2020**
(21) Application number: 17723702.1
(22) Date of filing: 17.05.2017
(51) Int. Cl.: A01J 25/00, A01J 25/06, A01J 25/11

(54) **METHOD FOR FLUID WHEY EXPULSION FROM A BODY OF CURD**
VERFAHREN ZUM FLUIDMOLKENAUSTRITT AUS EINEM QUARKKÖRPER
PROCÉDÉ D'EXPULSION DE LACTOSÉRUM LIQUIDE D'UNE MASSE DE CAILLÉ

(30) Priority: 19.05.2016 EP 16170424
(43) Date of publication of application: 27.03.2019
(73) Proprietor: FrieslandCampina Nederland B.V., 3818 LE Amersfoort (NL)
(72) Inventor: PENDERS, Johannes Antonius, 6700 AE Wageningen (NL); GIELENS, Fransiscus Christophorus, 6700 AE Wageningen (NL)
(74) Representative: FrieslandCampina Nederland B.V.
(86) International application number: PCT/EP2017/061845
(87) International publication number: WO 2017/198712

(56) References cited:
- DE-A1- 2 166 939
- FR-A1- 2 416 646
- GB-A- 770 189
- US-A- 4 418 616
- US-A- 5 024 146

## Description

The invention relates to a method for fluid whey expulsion from a body of curd including steps of
- placing a dairy base in a container;
- mixing in at least one coagulant;
- placing a removable insert into said dairy base in said container, said insert comprising at least one projecting member arranged to extend, preferably substantially vertically, into said dairy base; and
- having a body of curd formed by coagulation of said dairy base and
- removing said insert from said body of curd causing fluid whey to be expelled during and/or removal of said insert, from said body of curd into the at least one void left in said body of curd by said at least one projecting member of said insert.

A method related to the method described in the first paragraph of this description is known, for example from U.S. Patent No. 5,356,638, disclosing a method and apparatus for dehydration of yoghurt during transport and storage. After initial coagulation of a mixture of milk and a curing agent within a small container (to be marketed), a sieve type tube is placed downwardly within the mixture of the container. Vibration due to transport of the container helps the serum or whey within the partially coagulated yoghurt to pass inwardly to the interior of the tube thus partially dehydrating the yoghurt mixture within the container exteriorly of the sieve. Before consumption, the container can be tilted to pour out the serum or whey collected in the tube.

U.S. Patent No. 5,988,049 discloses an apparatus for controllably removing fluid whey from a curd body, wherein a plurality of thin, hollow, finely perforated wedges penetrate the curd body and a plurality of vacuum tubes within said wedges remove liquid whey by applying differential vacuum pressure.

A problem with these prior art methods and apparatus is that the body of the coagulated or formed dairy base, such as curd, is cut or otherwise disturbed by the introduction of an insert. The cutting of the curd, for instance, slightly damages the casein arrangement on the cutting face of the curd, which causes fat globules and cheese fines to slip into the whey.

U.S. Patent No. 4,418,616 describes another method for draining whey from cheese curd particles. This method utilizes a container provided with a perforated drain plate and an removable internal drain screen means which is constructed of two narrowly spaced permeable plates centrally placed in the container. This container is then filled with cheese curd particles which surround the drain means. Hence, the curd used in this method has been cut.

Other whey extracting methods, which avoid cutting of the curd, exist, for example using very small moulds (see for example DE2115102), or via evaporation, or for example removal of serum from large supplies of yoghurt by centrifugal methods (see for example the above-mentioned US 5,356,638), but these alternative whey extracting methods cannot be applied at an industrial level in the production of large amounts of dairy products, for example rather big blocks of cheese.

French Patent Application No. 7836341 discloses a method for preparing cheese in a device that comprises two chambers on top of each other separated by an initially closed partition, wherein a milk base ready to form the curd is poured into the top chamber and is allowed to coagulate, thereby forming a curd. The partition between top and bottom chamber is subsequently perforated and the whey formed is drained into the bottom chamber.

U.S. Patent No. 5,024,146 discloses a cheese drainer pan assembly comprising a cheese curd container, a top drainer plate and a bottom drainer pan assembly at the bottom connected to a drainer pan. The bottom drainer pan assembly comprises a drainer plate and upwardly extending drainer blades. Drainer blades are also extending downwardly from the top drainer plate. In operation wet curd is filled into the curd container and pressed downwardly by the top drainer plate. Expelled whey is collected through the bottom drainer pan assembly in the drainer pan and removed.

It is an aim of the present invention to solve or alleviate one or more of the above-mentioned problems. Particularly, the invention aims at providing an improved method for fluid whey expulsion from a body of curd, in particular a method for leaving the surface structure of the body of curd intact by avoiding cutting, hence damaging, the body of curd, such that loss or degradation of material due to cutting is prevented.

To this aim, according to a first aspect of the present invention, there is provided a method of the type described in the first paragraph of the description characterized in that the insert is removed from the body of curd formed causing fluid whey to be expelled, during and/or after removal of said insert from said body of curd into the at least one void left in said body of curd by said at least one projecting member of said insert. The whey is expelled from the body of curd due to a syneresis process in combination with the pressure of the body of curd's weight itself. This process may be accelerated by exerting external pressure on the body of curd, for example by pressurized air, or for example by a piston. The at least one void left in the body of curd after removal of the insert has at least a double function: it shortens an internal transport length of the whey to be expelled from the body of curd, and it simultaneously functions according to the principle of a water well, as the expelled whey is collected in the void. In this way, an improved method for fluid whey expulsion from a body of curd is obtained, leaving intact the body of curd, as the body of curd does not have to be cut for whey expulsion, resulting in a substantial decrease of raw material losses.

In the context of this application, the following words/terms are to be understood according to the following definitions:
- curd is a three dimensional space filling gel created by the aggregation (coagulation) of destabilized casein micelles;
- curd fines or cheese fines are fragments of curd, preferably smaller than 1 mm, broken off the curd particles during cutting and/or the initial phases of stirring;
- coagulation is the clotting / aggregation of destabilized micelles, achieved by
   ▪ limited proteolysis by selected proteinases
   ▪ acidification to about pH 4.6
   ▪ acidification to about pH 5.2 in combination with heating to about 90°C
- coagulant: protease able to hydrolyze the κ-casein, wherein the protease can find its origin from a stomach (of for example a calf, or a camel), from micro-organisms, or from plants (for example squash, cucumber, tomato, or other)
- clotting point is the moment when the first flocks become visible to the naked eye after addition of a coagulant to the dairy base, so the start of the second stage of the coagulation process. The coagulation reaction occurs in two stages. The first stage is the enzymatic proteolysis (cleavage of κ-casein) leading to the activation of the aggregation species. In the second stage, the destabilized micelles begin to aggregate.

An additional advantage of the method of the invention is that it has been shown that a more homogeneous structure of the final dairy product to be produced from the body of curd, for example cheese, can be obtained, resulting in for example a cheese crust with fewer pin-holes, so less prone to decay of the dairy product. This advantage is coupled to further processing steps elaborated herein-below.

The removable insert is preferably placed into said dairy base in said container before the second stage of the coagulation of said dairy base starts, in particular, before clotting of said dairy base starts. The insert can be placed into/onto the container before and/or during and/or after placing a dairy base in the container, and before and/or during and/or after mixing in at least one coagulant. In this way, the coagulation process will form a relatively solid curd forming gel around the insert, thus creating a body of curd with a relatively high surface area to volume ratio, shortening the internal transport length of the whey to be expelled, which enhances the syneresis process.

It should be noted that it is still possible to place the removable insert into the dairy base immediately after the clotting point, as previously defined in this text, without destroying the surface or protein structure of the dairy base. Essential however is that the coagulation has only just started when the insert is placed in the dairy body. That is, the coagulation has to be finalized to form the desired structure, and especially the gel structure, with the insert present in the coagulating body.

Pressure can optionally be exerted on said body of curd during or after removal of said insert from said body of curd. In this way, the process of whey expulsion into said at least one void can be accelerated if necessary. Care must however be taken to avoid that the curd structure is not damaged and/or disturbed.

Advantageously, the expelled fluid whey is removed from said at least one void. This can be done by simply pouring out the liquid whey collected in said at least one void by tilting the body of curd. It can also be automatically drained away or sucked out via a tube system to be inserted into said at least one void. Alternatively, said container may be provided with a bottom and/or wall having at least one reclosable opening facing said at least one void such that collected whey in said at least one void may be drained away via said reclosable opening in the container's bottom and/or wall. The method can thus easily be adapted to the various possibilities of more or less automated whey removal.

In a preferred embodiment, the volume of said body of curd can be reduced during and/or after whey removal by passing said body of curd through a reshaping device eliminating said at least one void in said curd body. As the at least one void takes up an important part of the body of curd's volume and only serves for whey expulsion, the void can be eliminated during and/or after whey removal, by passing the body of curd through, for example, a device with a funnel-shaped part, to obtain a more compact body of curd substantially without voids. Alternatively, as a result of deformation of the curd body, the voids may be closed under the weight of the curd body itself.

In a more preferred embodiment, the volume of said body of curd is reduced, during and/or after whey removal, by applying reduced pressure, for example vacuum pressure. In this way, air inclusion during elimination of the voids can be prevented. Moreover, an additional reshaping device may be avoided. Reduced pressure or vacuum pressure may also be used in combination with a reshaping device in order to accelerate the process of volume reduction. Reduced or vacuum pressure may also be applied for whey expulsion, removal of the expelled whey and for the elimination of voids in the body of curd more or less simultaneously.

In a more preferred embodiment of the method, said dairy base can be a reconstituted dairy protein concentrate or isolate, for example Refit® MCI 80 TL liquid, - a liquid micellar casein isolate which is commercially available from FrieslandCampina, The Netherlands - leading to a body of curd from which less whey has to be expelled.

In the method of the invention a system for fluid whey expulsion from a body of curd can be used comprising
a container arranged to receive a dairy base and at least one coagulant;
a removable insert comprising a plurality of projecting members arranged to extend, preferably substantially vertically, into the container.

The plurality of projecting members allows optimizing the surface area to volume ratio of the body of curd and decreasing the internal transport length of the whey to be expelled, both factors enhancing the syneresis process for whey expulsion.

In a more preferred embodiment of the method, the projecting members of said insert can have a length allowing extension until a bottom surface and/or wall of said container.

The deeper a projecting member can extend into the dairy base, the higher will be the surface area to volume ratio of the body of curd to be formed, enhancing the syneresis process for whey expulsion in the invention method. If the at least one void to be formed in the body of curd extends to the bottom of the container, the whey collecting in said void can also be drained away via a reclosable opening in the bottom facing the exit of said at least one void, or via a hollow projecting member of said insert.

Said at least one projecting member of said insert may preferably be made of a fluid tight material, as the insert can thus be inserted into the dairy base when the dairy base is still in a liquid phase, before coagulation, without loss of liquid dairy base leaking into the insert.

More preferably, said at least one projecting member of said insert can be made of a material allowing removal of said insert while keeping a curd's surface structure substantially intact. An intact surface structure or protein structure of a body of curd prevents fat and/or casein particles from leaking away into the whey, and assures the obtaining of whey without cheese fines and other insoluble particles present in the curd structure. Such a material is either very smooth or has a very smooth surface, or otherwise does not adhere to the curd.

In an advantageous embodiment of the method, the height of said container may be larger than its width. The higher the container, the higher can be the body of curd forming in the container, so the higher will be the pressure by the body of curd's own weight, which accelerates whey expulsion through syneresis, or by increasing a gravitational force, for example by a centrifuge. Alternatively, external pressure may be applied on the body of curd to accelerate whey expulsion.

The maximal distance between two projecting members of said plurality of projecting members of said insert is short enough for whey to be readily expelled from said body of curd, for example in a range of 0.1 to 10 cm, or preferably in the range of 0.2 to 5.0 cm, or more preferably in the range of 0.5 to 1.5 cm. An adequate distribution of said plurality of projecting members can enhance the whey expulsion.

In a still more advantageous embodiment of the method, edges and/or corners of said container and/or of said insert may be rounded off. Edges and/or corners may be susceptible to slightly damage the surface structure of the body of curd, causing fat and/or casein particles to slip into the liquid whey, which may be prevented by avoiding sharp structures to be present in the body of curd, so by rounding off edges and/or corners of said container and/or of said insert.

In a preferred embodiment of the method, the system used in this method may further comprise a curd reshaping device arranged to reduce a volume of said body of curd by eliminating said at least one void in said body of curd, providing the previously mentioned advantages.
Figure 1 shows a sectional side view of an exemplary embodiment of a container of a system that can be used according to the disclosure
Figure 2 shows a side view of an exemplary embodiment of a removable insert of a system that can be used according to the disclosure
Figures 3a, 3b and 3c show bottom views of three possible embodiments of a removable insert of a system that can be used according to the disclosure
Figure 4 shows a sectional side view of the container of Figure 1, in which an insert according to Figure 2 has been inserted;
Figure 5 shows a sectional side view of the container of Figure 4 after removal of the insert;
Figure 6 shows a sectional side view of an embodiment of a curd reshaping device of the system that can be used according to the disclosure.

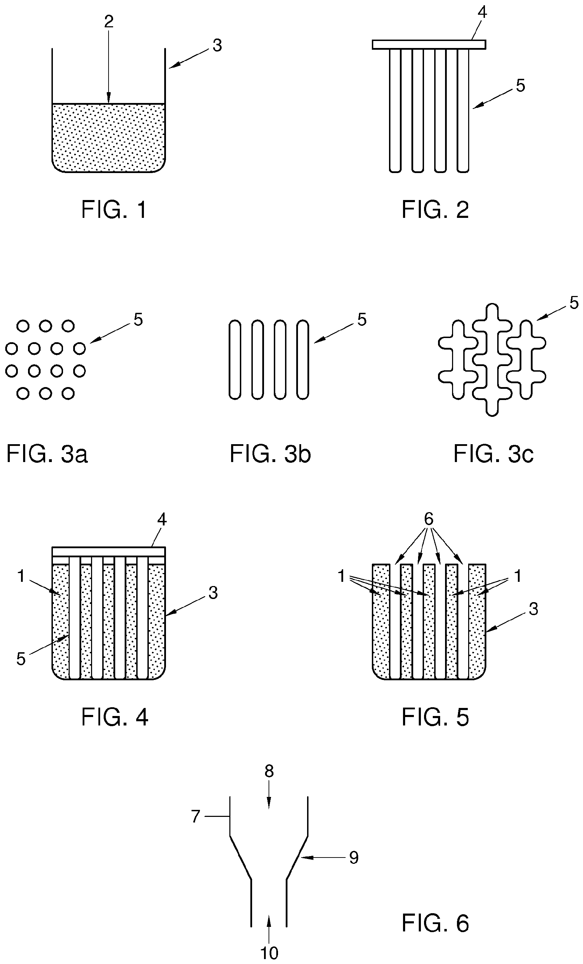

Figure 1 shows a sectional side view of an exemplary embodiment of a container 3 of a system that can be used according to an aspect of the disclosure. The container 3, arranged to receive a pre-determined amount of liquid, may have various shapes, for example having a round cross-section, or a rectangular cross-section, or any other form or shape. Size and volume of the container 3 may vary depending on the final product, starting from 100 ml to for example 10 000 litre. The container 3 can be made of a fluid-tight, preferably of a non-adhesive material, for example of POM (polyacetal), PTFE (polytetrafluorethylene or Teflon®), PVC (polyvinyl chloride), PP (polypropylene), PE (polyethylene), SS (stainless steel), or any other suitable material that does not stick to or bond the curd structure formed. The container 3 preferably does not present any sharp edges and/or corners. Edges and/or corners, if any, are preferably rounded-off, for example a preferably rounded-off junction between a container's side wall and a container's bottom. To apply the method according to the invention, a dairy base 2, arranged for producing a dairy product, in particular for producing cheese, is placed in the container 3, the dairy base for example being liquid cheese milk (for example from a cow, a goat, a sheep *etc*.), or for example a mixture of milk and cream, or preferably, a reconstituted dairy product concentrate such as a reconstituted dairy protein concentrate or isolate, for example Refit® MCI 80 TL liquid (ex FrieslandCampina, The Netherlands), with or without addition of cream, with or without starter, colorant, CaCl₂, or other dairy and/or non-dairy additives, as for example salt or moisture binders as alginate, whey proteins or starch. The dairy base can preferably fill for example half of the container's volume. The dairy base 2 can then be heated up to a desired temperature, for example of 35°C. At least one coagulant, for example rennet, is added into the liquid dairy base 2 in the container 3, and mixed during a predetermined period of for example 10 seconds.

Figure 2 shows a side view of an exemplary embodiment of a removable insert 4 of a system that can be used according to the disclosure. A removable insert 4 is placed into said dairy base 2 in said container 3, said insert 4 comprising at least one projecting member 5 arranged to extend substantially vertically into said dairy base 2, preferably before coagulation of said dairy base 2 starts, so when the dairy base 2 is still in a liquid phase. Alternatively, a dairy base 2 and a coagulant could also be poured into said container 3 when said insert 4 is already placed in said container 3. Advantageously, an insert 4 may comprise a plurality of projecting members 5, as for example in Fig. 2, arranged to extend substantially vertically into said dairy base 2. The plurality of projecting members 5, for example five, or ten or more projecting members 5, may occupy a total volume in a range of 10-95%, preferably of 20-80%, more preferably of 30-70%, still more preferably 40-60%, for example 50% of the container's volume, or more or less than 50 % of the container's volume, depending on the volume occupied by the dairy base 2 in the container 3. The number of projecting members 5 may also depend on the desired distance between two projecting members 5, which minimal distance is determined by a minimal strength of said body of curd, and which maximal distance is determined by a diffusion length short enough for the whey expulsion to work. Said at least one projecting member 5 of said insert 4 preferably has a length allowing extension until a bottom surface of said container 3, for example a length in a range of about half the container's height to the container's height. Advantageously, the at least one projecting member 5 of said insert 4 is made of a fluid tight material, for example of POM (polyacetal), PTFE (polytetrafluorethylene or Teflon®), PVC (polyvinyl chloride), PP (polypropylene), PE (polyethylene), SS (stainless steel), or any other suitable material that does not stick to or bond the curd structure formed , so that it can be inserted in the dairy base 2 when it is still in a liquid phase and so that the dairy base can turn into a relatively solid curd forming gel without loss of liquid of the dairy base. In a further embodiment, the at least one projecting member 5 of said insert 4 can be made of a flexible material, for example one of the above-mentioned materials, such that a circumference and/or volume of said at least one projecting member 5 can be varied, in particular decreased, for example by applying vacuum pressure on an inside of said at least one projecting member 5. In this way, said insert 4 can easily be removed from said body of curd 1 formed by coagulation of said dairy base 2.

A cross-section of said at least one projecting member 5 may have a wide variety of shapes, as can be seen from Figures 3a, 3b and 3c, in which bottom views of three possible embodiments of a removable insert of a system that can be used according to the disclosure. The at least one projecting member 5 may for example be cylindrical as in Fig. 3a, substantially rectangular or plate-like as in Fig. 3b, or of any other shape, as for example in Fig. 3c, as long as said projecting member 5 takes up a certain volume within the container, for example 50% of the container's volume, and reduces the internal transport length of the whey to be expelled from the body of curd. The choice for a total volume of the container 3 to be filled by the at least one projecting member 5 may also depend on a desired liquid whey content to be left in the body of curd 1, for example depending on the kind of dairy product, in particular the kind of cheese, to be produced from said body of curd 1. The projecting member 5 may have an equal width over its entire length, or have a tapering shape, for example with a projecting member's end towards the container's bottom being smaller than a projecting member's end near the dairy base's surface. Edges and/or corners of the insert 4, in particular of the at least one projecting member 5, are preferably rounded-off.

Figure 4 shows a sectional side view of the container 3 of Figure 1, filled with a dairy base 2, in which an insert 4 according to the embodiment of Figure 2 has been inserted. A predetermined time, in a range of for example 10 minutes to 24 hours, more preferably 20 minutes to 2 hours, can now be given to the coagulation process, which turns the liquid dairy base 2 into a more solid curd forming gel, to have a body of curd 1 formed by coagulation of said dairy base 2. To expulse liquid whey from said body of curd 1 formed around said insert 4, the method according to an aspect of the invention now includes the new and inventive step of removing said insert 4 from said body of curd 1, which causes fluid whey to be expelled, during and/or after removal of said insert 4, from said body of curd 1 into a void 6 left in said body of curd 1 by said at least one projecting member 5 of said insert 4. Said at least one projecting member 5 of said insert 4 is preferably made of a non-adhesive material, for example of POM (polyacetal), PTFE (polytetrafluorethylene or Teflon®), PVC (polyvinyl chloride), PP (polypropylene), PE (polyethylene), SS (stainless steel), or any other suitable material that does not stick to or bond the curd structure formed, allowing removal of said insert 4 while keeping a curd's surface structure substantially intact.

Figure 5 shows a sectional side view of the container of Figure 4 after removal of the insert 4. The body of curd 1 is now a relatively solid gel, so that at least one, and preferably a plurality of voids 6 are left in said body of curd 1 by said at least one, and preferably by a plurality of projecting members 5. The obtained body of curd 1 has a relatively high surface area to volume ratio. The pressure of the body of curd's weight may now be sufficient for the whey to be expelled by syneresis, as the internal transport length of the whey from the body of curd 1 into the at least one void 6 is relatively short, for example in the range of 0.1 to 10 cm, or preferably in the range of 0.2 to 5.0 cm, or more preferably in the range of 0.5 to 1.5 cm. Optionally, additional pressure may be exerted on said body of curd 1 during and/or after removal of said insert 4 from said body of curd 1 to accelerate the syneresis process. After a predetermined period of time, in a range of for example 10 minutes to 24 hours, more preferably 20 minutes to 2 hours, the expelled fluid whey may be removed from said at least one void 6. This can be done in many different ways, for example by simply pouring out the liquid whey collected in said at least one void 6 by tilting container 3 containing the body of curd 1. It can also be automatically drained away or sucked out via a tube system to be inserted into said at least one void 6. Alternatively, said container 3 may be provided with a bottom and/or wall having at least one reclosable opening facing said at least one void 6 such that collected whey in said at least one void 6 may be drained away via said reclosable opening in the container's bottom and/or wall. In another alternative, at least part of the whey may also be evaporated.

During and/or after whey expulsion, the volume of said body of curd 1 may be reduced by passing said body of curd 1 through a reshaping device 7 eliminating said at least one void 6 in said curd body 1. Figure 6 shows a sectional side view of an embodiment of a curd reshaping device 7 of the system that can be used according to an aspect of the invention. The curd reshaping device 7 may be arranged to reduce the volume of said body of curd 1 by eliminating said at least one void 6 in said body of curd 1, resulting in a body of curd's volume reduction in the range of 10-95%, more preferably in the range of 40-60% depending on the starting curd material. Said reshaping device 7 may be provided with an insertion opening 8 through which the body of curd 1 can be inserted into the curd reshaping device 7. The insertion opening 8 may preferably have a width at least equal to a width of the system's container 3, so to a width of the formed body of curd 1. More preferably, the insertion opening 8 has a shape similar to the bottom's or top's shape of the container 3. The reshaping device may also comprise a tapered or funnel-shaped section 9, narrowing towards an exit opening 10 of the curd reshaping device 7, wherein the exit opening 10 has a cross-sectional surface area of for example only half of the insertion opening's cross-sectional area. The body of curd 1 can pass through said curd reshaping device 7 under its own weight, for example when said reshaping device 7 is placed in a substantially vertical position with the insertion opening 8 above the exit opening 10, or by applying a force to said body of curd 1, with or without applying vacuum, for example when said reshaping device 7 is placed in a substantially horizontal position. Side wall(s) of said curd reshaping device 7 may for example be permeable to liquid, in particular to liquid whey. In this way, more whey may be expelled from the body of curd 1 during reshaping of said body of curd 1. In an advantageous embodiment, the reshaping of said body of curd 1 to eliminate said at least one void 6 may be combined with a pressing of said body of curd 1 in a mould, for example in case said body of curd is intended for production of certain kinds of cheese.

## Claims

1. Method for fluid whey expulsion from a body of curd (1) including the steps of
- placing a dairy base (2) in a container (3);
- mixing in at least one coagulant;
- placing a removable insert (4) into said dairy base (2) in said container (3), said insert (4) comprising at least one projecting member (5) arranged to extend, preferably substantially vertically, into said dairy base (2);
- having a body of curd (1) form by coagulation of said dairy base (2);
- removing said insert (4) from said body of curd (1) causing fluid whey to be expelled, during and/or after removal of said insert (4), from said body of curd (1) into the at least one void (6) left in said body of curd (1) by said at least one projecting member (5) of said insert (4).

2. Method according to claim 1, wherein the removable insert (4) is placed into said dairy base (2) in said container (3) before the second stage of coagulation of said dairy base (2) starts, in particular before clotting of said dairy base (2) starts.

3. Method according to any of the preceding claims, wherein pressure is exerted on said body of curd (1) during or after removal of said insert (4) from said body of curd (1).

4. Method according to any of the preceding claims, wherein the expelled fluid whey is removed from said at least one void (6).

5. Method according to claim 4, wherein during and/or after whey removal, the volume of said body of curd (1) is reduced by passing said body of curd (1) through a reshaping device eliminating said at least one void (6) in said curd body.

6. Method according to claim 4, wherein during and/or after whey removal, the volume of said body of curd (1) is reduced by applying reduced pressure.

7. Method according to any of the preceding claims, wherein said dairy base (2) is a reconstituted dairy protein concentrate or isolate.

## Patentansprüche

1. Verfahren zum Ausstoßen von flüssiger Molke aus einem Käsebruchkörper (1), umfassend die folgenden Schritte:
- Platzieren einer Molkereiproduktbasis (2) in einen Behälter (3),
- Vermischen mit mindestens einem Koagulationsmittel,
- Platzieren eines entfernbaren Einsatzes (4) in die Molkereiproduktbasis (2) in dem Behälter (3), wobei der Einsatz (4) mindestens ein vorragendes Glied (5) umfasst, das dazu angeordnet ist, sich vorzugsweise im Wesentlichen vertikal in die Molkereiproduktbasis (2) zu erstrecken,
- Bilden eines Käsebruchkörpers (1) durch Koagulation der Molkereiproduktbasis (2),
- Entfernen des Einsatzes (4) aus dem Käsebruchkörper (1), wodurch veranlasst wird, dass während des Entfernens und/oder nach dem Entfernen des Einsatzes (4) flüssige Molke aus dem Käsebruchkörper (1) in den mindestens einen Leerraum (6) ausgestoßen wird, der von dem mindestens einen vorragenden Glied (5) des Einsatzes (4) in dem Käsebruchkörper (1) hinterlassen worden ist.

2. Verfahren nach Anspruch 1, wobei der entfernbare Einsatz (4) in die Molkereiproduktbasis (2) in dem Behälter (3) platziert wird, bevor das zweite Koagulationsstadium der Molkereiproduktbasis (2) beginnt, insbesondere bevor die Klumpenbildung der Molkereiproduktbasis (2) beginnt.

3. Verfahren nach einem der vorhergehenden Ansprüche, wobei während des Entfernens oder nach dem Entfernen des Einsatzes (4) aus dem Käsebruchkörper (1) Druck auf den Käsebruchkörper (1) ausgeübt wird.

4. Verfahren nach einem der vorhergehenden Ansprüche, wobei die ausgestoßene flüssige Molke aus dem mindestens einen Leerraum (6) entfernt wird.

5. Verfahren nach Anspruch 4, wobei während des Entfernens und/oder nach dem Entfernen der Molke das Volumen des Käsebruchkörpers (1) reduziert wird, indem der Käsebruchkörper (1) durch eine Umformvorrichtung geführt wird, die den mindestens einen Leerraum (6) in dem Käsebruchkörper eliminiert.

6. Verfahren nach Anspruch 4, wobei während des Entfernens und/oder nach dem Entfernen der Molke das Volumen des Käsebruchkörpers (1) durch Ausüben von reduziertem Druck reduziert wird.

7. Verfahren nach einem der vorhergehenden Ansprüche, wobei die Molkereiproduktbasis (2) ein rekonstituiertes Milchprotein-Konzentrat oder -Isolat ist.

## Revendications

1. Procédé pour l'expulsion de lactosérum fluide d'un corps de caillé (1) comprenant les étapes de
- placement d'une base lactée (2) dans un récipient (3) ;
- incorporation d'au moins un coagulant ;
- placement d'un insert amovible (4) dans ladite base lactée (2) dans ledit récipient (3), ledit insert (4) comprenant au moins un élément saillant (5) disposé pour s'étendre, préférablement sensiblement verticalement, dans ladite base lactée (2) ;
- formation d'un corps de caillé (1) par coagulation de ladite base lactée (2) ;
- élimination dudit insert (4) dudit corps de caillé (1) causant l'expulsion de lactosérum fluide, pendant et/ou après l'élimination dudit insert (4), dudit corps de caillé (1) dans l'au moins une cavité (6) laissée dans ledit corps de caillé (1) par le dit au moins un élément saillant (5) dudit insert (4).

2. Procédé selon la revendication 1, l'insert amovible (4) étant placé dans ladite base lactée (2) dans ledit récipient (3) avant le début du deuxième stade de coagulation de ladite base lactée (2), en particulier avant le début du caillage de ladite base lactée (2).

3. Procédé selon l'une quelconque des revendications précédentes, une pression étant exercée sur ledit corps de caillé (1) pendant ou après l'élimination dudit insert (4) dudit corps de caillé (1).

4. Procédé selon l'une quelconque des revendications précédentes, le lactosérum fluide expulsé étant éliminé de ladite au moins une cavité (6).

5. Procédé selon la revendication 4, où pendant et/ou après l'élimination de lactosérum, le volume dudit corps de caillé (1) est réduit en passant ledit corps de caillé (1) à travers un dispositif de reformage éliminant ladite au moins une cavité (6) dans ledit corps de caillé.

6. Procédé selon la revendication 4, où pendant et/ou après l'élimination de lactosérum, le volume dudit corps de caillé (1) est réduit par application de pression réduite.

7. Procédé selon l'une quelconque des revendications précédentes, ladite base lactée (2) étant un concentrat ou un isolat de protéines de lait reconstitué.
